Europäisches Patentamt

European Patent Office

Office européen des brevets

(19)

(11) Numéro de publication: **0 266 253 B1**

(12) **FASCICULE DE BREVET EUROPEEN**

(45) Date de publication de fascicule du brevet:
14.08.91

(51) Int. Cl.⁵: **G05D 16/06**, F17C 13/04

(21) Numéro de dépôt: 87402285.8

(22) Date de dépôt: 13.10.87

(54) Robinet détendeur de gaz à membrane basculante.

(30) Priorité: 28.10.86 FR 8614969

(43) Date de publication de la demande:
04.05.88 Bulletin 88/18

(45) Mention de la délivrance du brevet:
14.08.91 Bulletin 91/33

(84) Etats contractants désignés:
DE ES GB IT

(56) Documents cités:
EP-A- 0 150 143
FR-A- 2 579 337

(73) Titulaire: BRIFFAULT, Société dite:
Résidence "La Belle Epoque" 11, Impasse
Gaudelet
F-75011 Paris(FR)

(72) Inventeur: **Huet, Alain**
31, rue Charles Michel
F-27340 Pont De L'Arche(FR)
Inventeur: **Mansuy, Alain**
52, rue Blingue
F-27610 Romilly/Andelle(FR)
Inventeur: **Mouly, Pierre**
Chemin de la Forêt Flipou
F-27380 Fleury/Andelle(FR)

(74) Mandataire: **Bourgognon, Jean-Marie et al**
Cabinet Flechner 22, Avenue de Friedland
F-75008 Paris(FR)

## Description

Par le EP-A-0 150 143, on connaît déjà un robinet détendeur de gaz ayant les caractéristiques mentionnées au préambule de la revendication principale. Dans ce cas, la partie élastique est constituée d'une surépaisseur de la membrane. Cette partie élastique et le ressort de régulation sont deux pièces distinctes. Le robinet détendeur est difficile à assembler et à régler, parce qu'il comporte deux éléments élastiques.

L'invention pallie cet inconvénient par un robinet détendeur ayant les caractéristiques mentionnées à la partie caractérisante de la revendication 1.

Les moyens de modification peuvent comprendre une goulotte ménagée sur la membrane suivant une hémi-couronne allant d'une partie de la membrane en se trouvant d'un côté par rapport au point de basculement et, de préférence, en regard du raccord d'entrée à une partie de la membrane se trouvant de l'autre côté du point de basculement et, de préférence diamétralement opposée, l'hémi-couronne étant avantageusement en pente descendante vers cette partie diametralement opposée, et le mécanisme de commande comprend des moyens pour déplacer le ressort de régulation le long de la goulotte, une bille étant de préférence interposée entre la goulotte et le ressort de régulation. En manoeuvrant la manette, on déplace le ressort de régulation le long de la goulotte. Comme la goulotte est inclinée, le ressort est comprimé et assure une fermeture impeccable du robinet en faisant basculer la membrane vers la position de fermeture avec une force relativement grande, bien que faible en valeur absolue, puisque, pour la fermeture, on n'a pas à vaincre de force antagoniste, comme ce serait le cas si le ressort de régulation était resté dans la position de départ diamétralement opposée.

Dans sa forme la plus achevée, l'invention prévoit que les moyens de modification comprennent un levier coudé dont la première branche a un point de contact avec une partie de la membrane se trouvant d'un côté par rapport au point de basculement et, de préférence, en regard du raccord d'entrée et dont l'autre branche, est interposée entre le ressort de régulation fixe et la membrane, la première branche étant déplacée par le mécanisme de commande de manière, en faisant basculer le levier coudé au point de contact, que l'autre branche écarte le ressort de régulation de la membrane et que le point de contact devienne le point d'application de la force appliquée par le ressort de régulation sur la membrane. Cette solution plus simple et plus fiable que la précédente en a les avantages, avec en plus la possibilité du choix de la force à appliquer sur la manette, en jouant sur les différences de longueur des branches du levier. Pour faciliter le pivotement du levier autour de son point de contact, celui-ci est de préférence arrondi et vient se loger, le cas échéant avec encliquetage, dans le logement arrondi du plateau de la membrane. Le sommet peut être ménagé sur un talon issu du point d'intersection des deux branches. Le tronçon de la première branche, qui est à proximité du point de basculement, est à distance de la membrane. Une imprécision de fabrication ne se traduit pas ainsi par un écartement insuffisant du ressort et de la membrane.

La membrane proprement dite peut être fixée à son plateau. De préférence, elle est seulement en contact avec celui-ci. On préfère également obtenir le montage à basculement de la membrane en l'articulant sur le corps, le point d'appui ou d'articulation étant bien entendu intermédiaire entre la partie de la membrane qui vient sur le raccord d'entrée et la partie de la membrane sur laquelle s'applique le ressort de régulation.

Au dessin annexé, donné uniquement à titre d'exemple,

Les figures 1 et 2 sont des vues en coupe schématique du robinet suivant l'invention et

La figure 3 est une vue en coupe d'une variante du levier coudé des figures 1 et 2.

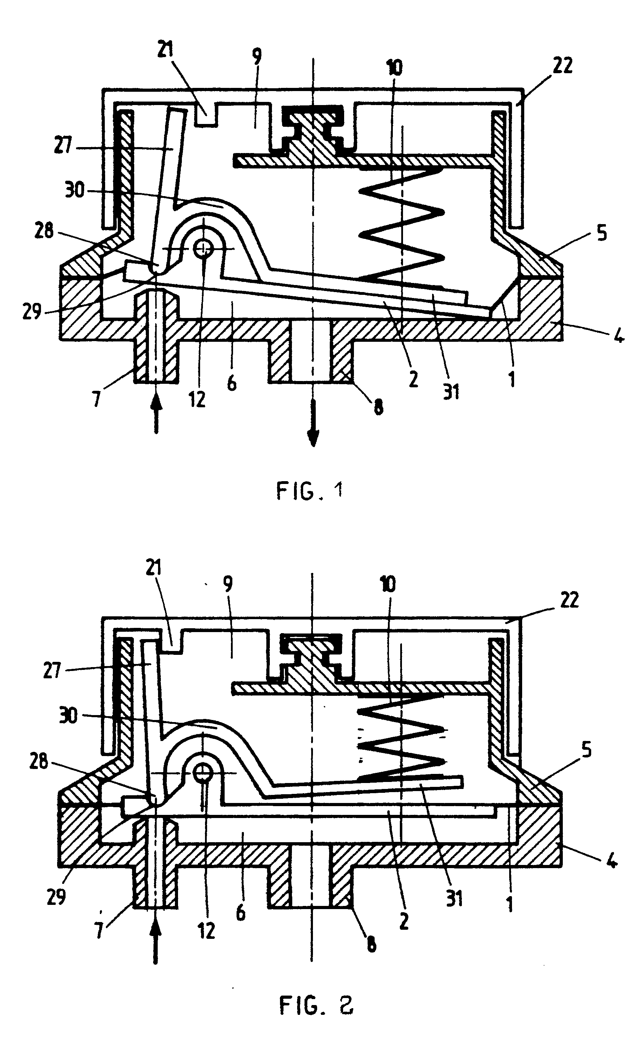

Le détendeur de gaz représente aux figures 1 et 2 comprend une membrane 1 dont la face supérieure est en contact avec un plateau 2 rigide sans en être solidaire et dont le pourtour est coincé entre deux coquilles 4 et 5 constituant le corps. La membrane 1 subdivise l'espace intérieur du corps en une enceinte 6 où débouchent des raccords d'entrée 7 et de sortie 8 et en une chambre 9 de réception d'un ressort de régulation 10. L'une des extrémités du ressort 10 s'appuie sur la paroi intérieure de la coquille 5. L'autre extrémité du ressort de régulation 10 repousse le plateau 2 avec interposition d'un levier coudé articulé à une extrémité à un axe d'articulation 12 servant également d'axe d'articulation au plateau 2. L'axe d'articulation 12 est monté dans des paliers ménagés sur la coquille 5.

Les moyens de modification du point d'application de la force du ressort 10 sur la membrane 1, comprennent le levier coudé dont la première branche 27 a une partie arrondie 28 constituant le sommet du levier qui est logée dans un logement arrondi 29 du plateau de la membrane. Ce logement est situé sensiblement au droit du raccord d'entrée 7. L'autre branche est constituée par un arceau 30 et par un tronçon 31 se trouvant à distance de l'axe de basculement 12. Le tronçon 31 est interposé entre le ressort 10 et le plateau 2 de la membrane 1.

Pour fermer le robinet, on tourne une manette 22 de manoeuvre d'un excentrique 21. Celui-ci 21 repousse vers la gauche l'extrémité de la branche 27. L'ensemble du levier coudé bascule autour du sommet 28. Le tronçon 31 repousse le ressort 10 et l'écarte du plateau 2. Le ressort 10 continue à appliquer une force au plateau 2, mais le point d'application en est maintenant le sommet 28 qui se trouve de l'autre côté de l'axe de basculement 12. Il s'en suit que le plateau 2 bascule autour de l'axe 12 et que la membrane 1 vient s'appliquer sur le raccord d'entrée 7.

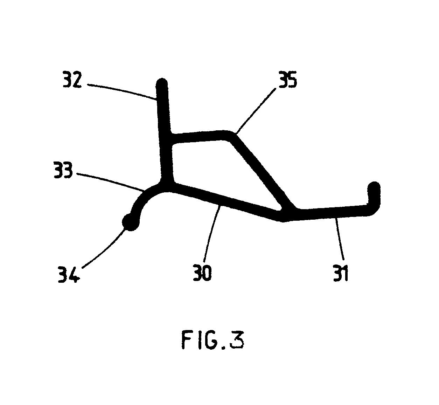

La figure 3 représente un levier articulé dont la branche conjuguée avec le ressort comporte toujours les tronçons 30 et 31, mais dont l'autre branche comporte outre un tronçon 32 principal coopérant avec l'excentrique, un talon 33 à extrémité arrondie 34 venant dans le logement prévu sur le plateau 2 et une entretoise 35. Tant l'extrémité arrondie 34 du talon 33 que le tronçon 31, peuvent être ainsi mis à distance suffisante d'un axe de basculement compris entre eux.

**Revendications**

1. Robinet détendeur de gaz formé d'un corps subdivisé, par une membrane (1) supportée par un plateau (2) basculant autour d'un point de basculement (12), en une enceinte (6) où débouchent des raccords d'entrée (7) et de sortie (8) et en une chambre de réception (9) d'un ressort de régulation (10) monté de manière à appliquer à la membrane (1) une force tendant à la faire basculer autour du point de basculement (12) d'une position de fermeture où la membrane (1) s'applique sur le raccord d'entrée (7) à une position d'ouverture où elle dégage le raccord d'entrée (7), un mécanisme de commande, manoeuvré par une manette (22) lui donnant un déplacement le mettant en contact avec la membrane (1), comprenant une partie élastique et étant monté de manière à appliquer à la membrane (1) une force prépondérante tendant à la faire basculer de la position d'ouverture à la position de fermeture, caractérisé en ce que la partie élastique est constituée par le ressort de régulation (10) et il est prévu des moyens, commandés par la manette (22), de modification (27, 31) du point d'application de la force du ressort de régulation (10) sur la membrane (1) pour l'amener sur une partie de la membrane se trouvant de l'autre côté du point de basculement (12) de manière que la force ainsi appliquée tende à faire basculer la membrane (1) dans la position de fermeture.

2. Robinet suivant la revendication 1, caractérisé en ce que les moyens de modification comprennent un levier coudé dont la première branche (27) a un point de contact avec une partie de la membrane (1) se trouvant d'un côté par rapport au point de basculement (12) et, de préférence, en regard du raccord d'entrée (7) et dont la seconde branche (31) est interposée entre le ressort de régulation (10) fixe et la membrane (1), la première branche (27) étant déplacée par le mécanisme de commande de manière, en faisant basculer le levier coudé au point de contact, que la seconde branche (31) écarte le ressort de régulation (10) de la membrane (1) et que le point de contact devienne le point d'application de la force appliquée par le ressort de régulation (10) sur la membrane (1).

3. Robinet suivant la revendication 2, caractérisé en ce que le point de contact est arrondi et pivote dans un logement arrondi de la membrane (1).

4. Robinet suivant la revendication 2 ou 3, caractérisé en ce que le tronçon de la seconde branche (31), qui est à proximité du point de basculement (12), est à distance de la membrane (1).

**Claims**

1. Gas pressure-reducing valve formed by a body subdivided, by a diaphragm (1) supported on a plate (2) rocking around a rocking point (12), into an enclosed space (6) into which there open inlet (7) and outlet (8) connection pieces, and a chamber (9) for receiving a regulating spring (10) mounted so that it applies to the diaphragm (1) a force tending to cause the diaphragm (1) to rock around the rocking point (12) from a closing position in which the diaphragm (1) bears against the inlet connection piece (7) to an opening position in which the diaphragm (1) frees the inlet connection piece (7), in which a control mechanism operated by an operating handle (22) which displaces this control mechanism, placing it in contact with the diaphragm (1), comprises an elastic part and is mounted so as to apply to the diaphragm (1) a dominant force tending to cause it to rock from the opening position to the closing position,
   **characterised in that** the elastic part is formed by the regulating spring (10) which is provided with means (27, 31), controlled by the operating handle (22), for modifying the point of application of the force of the regulating spring (10) to the diaphragm (1) in order to bring this point of application to a part of the diaphragm located on the other side of the rocking point (12) so that the force thus applied tends to cause the diaphragm (1) to rock into the closing position.

2. Valve according to claim 1,
   **characterised in that** the modification means comprise a bent lever, the first arm (27) of which has a point of contact with a part of the diaphragm (1) located on one side in relation to the rocking point (12) and, preferably, opposite the inlet connection piece (7), and the second arm (31) of which is inserted between the fixed regulating spring (10) and the diaphragm (1), the first arm (27) being displaced by the control mechanism so that, by causing the bent lever to rock at the point of contact, the second arm (31) removes the regulating spring (10) from the diaphragm (1) and the point of contact becomes the point of application for the force applied by the regulating spring (10) to the diaphragm (1).

3. Valve according to claim 2,
   **characterised in that** the point of contact is rounded and pivots within a rounded housing in the diaphragm (1).

4. Valve according to claim 2 or 3,
   **characterised in that** the length of the second arm (31), which is near the rocking point (12), is at a distance from the diaphragm (1).

## Patentansprüche

1. Gasdruckreduzierventil mit kippender Membran, das ein Gehäuse aufweist, das durch eine Membran (1), die durch eine Platte (2) unterstützt ist, die wiederum um einen Kippunkt (12) kippbar gelagert ist, unterteilt ist in einen Raum (6), wo ein Eingangsanschlußstutzen (7) und ein Ausgangsanschlußstutzen (8) einmünden, und in eine Aufnahmekammer (9) mit einer Regulierungsfeder (10), die derart montiert ist, daß sie auf die Membran (1) eine Kraft ausübt, die diese um den Kippunkt (12) kippen läßt von einer Schließstellung, wo die Membran (1) auf dem Eingangsstutzen (7) aufliegt in eine Öffnungsstellung, wo sie sich von dem Eintrittsstutzen (7) löst, und weiterhin einen Steuermechanismus aufweist, der durch einen Handgriff (22) betätigbar ist, der ihm eine Verschiebung verleiht, die ihn in Kontakt mit der Membran (1) bringt, und der einen elastischen Teil umfaßt und derart montiert ist, daß er auf die Membran (1) eine Kraft ausübt, die überwiegend so gerichtet ist, daß sie die Membran von der Öffnungsstellung in die Schließstellung kippen läßt, dadurch **gekennzeichnet**, daß der elastische Teil durch die Regulierungsfeder (10) gebildet ist und daß durch den Handgriff (22) betätigbare Mittel (27,31) zur Änderung des Angriffspunkts der Kraft der Regulierungsfeder (10) auf die Membran (1) vorgesehen sind, um diese auf einen Teil der Membran zu führen, der sich auf der anderen Seite des Kippunktes (12) befindet, derart, daß die so ausgeübte Kraft die Membran (1) in die Schließstellung kippen läßt.

2. Gasdruckreduzierventil nach Anspruch 1, dadurch **gekennzeichnet**, daß die Änderungsmittel einen gekrümmten Hebel umfassen, dessen erster Schenkel (27) eine Kontaktstelle mit einem Teil der Membran (1) aufweist, die sich im Verhältnis zum Kippunkt (12) auf der einen Seite befindet und vorzugsweise im Bereich des Eingangsstutzens (7), und dessen zweiter Schenkel (31) zwischen die feste Regulierungsfeder und die Membran (1) eingesetzt ist, wobei der erste Schenkel (27), indem er ein Kippen des gekrümmten Hebels an der Kontaktstelle bewirkt, durch den Steuermechanismus derart verschiebbar ist, daß der zweite Schenkel die Regulierungsfeder (10) von der Membran entfernt, und daß die Kontaktstelle zum Angriffspunkt der durch die Regulierungsfeder (10) auf die Membran (1) ausgeübten Kraft wird.

3. Gasdruckreduzierventil nach Anspruch 2, dadurch **gekennzeichnet**, daß die Kontaktstelle abgerundet ist und in einer abgerundeten Aufnehmung der Membran (1) schwenkbar gelagert ist.

4. Gasdruckreduzierventil nach Anspruch 2 und 3, dadurch **gekennzeichnet**, daß das Teilstück des zweiten Schenkels (31), das dem Schwenkpunkt (12) benachbart ist, einen Abstand von der Membran (1) aufweist.

FIG. 1

FIG. 2

FIG.3